# EUROPEAN PATENT APPLICATION

(11) **EP 4 810 281 A1**
(43) Date of publication of application: **23.09.2026**
(21) Application number: 26163334.1
(22) Date of filing: 09.03.2026
(51) Int. Cl.: B60H 1/00, B60H 1/32

(54) **THERMAL MANAGEMENT SYSTEM FOR A VEHICLE UTILIZING A HEATING, VENTILATION, AND AIR CONDITIONING SYSTEM WITH AN INTEGRATED COOLING MODULE**

(30) Priority: 18.03.2025 US 202519082518
(71) Applicant: Volvo Car Corporation, 405 31 Göteborg (SE)
(72) Inventor: NIELSEN, Filip, 437 31 LINDOME (SE); NILSSON, Ulf, 427 50 BILLDAL (SE)
(74) Representative: Kransell & Wennborg KB

(57) **Abstract**

A thermal management system (102) for a vehicle (100), the thermal management system including: a first heat exchanger (204a) disposed in a HVAC system of the vehicle, where the first heat exchanger is an ambient heat exchanger with an air side in thermal communication with an external environment of the vehicle; and a second heat exchanger (204b) disposed in the HVAC system of the vehicle downstream of the first heat exchanger and adapted to receive an air flow through or around the first heat exchanger, where the second heat exchanger is adapted to function as either a heater or a cooler for a cabin of the vehicle responsive to an operating condition or environment of the vehicle. The thermal management system includes no additional heat exchangers disposed in the HVAC system or a coolant module of the vehicle aside from the first heat exchanger and the second heat exchanger.

## Description

### INTRODUCTION

The present disclosure relates generally to the automotive field. More particularly, the present disclosure relates to a thermal management system for a vehicle, such as a battery electric vehicle (BEV), utilizing a heating, ventilation, and air conditioning (HVAC) system with an integrated cooling module.

In a vehicle, the thermal management system is used to transfer thermal energy between different components and systems. With the introduction of BEVs, different heat pumps systems have been utilized to reduce the overall energy consumption needed to cool/heat the battery system, electric drive (ED) system, electric components, and cabin of the vehicle. These heat pump systems can come in several different setups, depending on the component selection, type of refrigerant used, and desired performance.

Typically, the thermal management system includes an ambient heat exchanger that transfers thermal energy between the vehicle and the external environment. This thermal energy transfer is performed by either a coolant medium or a refrigerant medium to the external environment via the ambient heat exchanger (i.e., a radiator), with a blower fan positioned in proximity to the ambient heat exchanger to move air over the active surface of the heat exchanger. In general, this heat exchanger and blower fan combination is referred to as the cooling module.

The HVAC system transfer thermal energy in a similar manner, but typically consists of two heat exchangers connected to the coolant/refrigerant loop of the vehicle. These heat exchangers either cool or warm air from the external environment and transfer the conditioned air into the cabin of the vehicle via a cabin blower fan. The first heat exchanger is typically a cooling/drying heat exchanger and the second heat exchanger is typically a warming heat exchanger.

Conventional thermal management systems therefore contain three or more heat exchangers, the ambient heat exchanger of the cooling module, the cooler of the HVAC system, and the heater of the HVAC system, that transfer thermal energy between the vehicle and the external environment. There have typically been relatively large physical distances between the cooling module (located in the front of the vehicle) and the HVAC system (located in proximity to the cabin of the vehicle). With the introduction of BEVs, these physical distances have decreased due to the short overhang from the front wheel position, meaning the physical distances from the cabin of the vehicle to the front of the vehicle have decreased.

The present introduction is provided as illustrative environmental context only. It will be readily apparent to those of ordinary skill in the art that the principles and concepts of the present disclosure may be implemented in other environmental contexts equally, without limitation.

### SUMMARY

The present disclosure provides a thermal management system for a vehicle, such as a BEV, utilizing a HVAC system with an integrated cooling module. Thus, the thermal management system of the present disclosure reduces the number of heat exchangers utilized to transfer thermal energy between the vehicle and the external environment. Further, the thermal management system of the present disclosure may recycle the thermal energy transferred into the cabin of the vehicle on the air side of the HVAC system back into the thermal management system via a recirculation air channel, making the thermal management system more energy efficient. Such energy efficiency and component cost are constantly evolving areas of focus in vehicle and thermal management system design. Integrating the cooling module of the present disclosure into the HVAC system and utilizing a switchable heat exchanger in the HVAC system enables the heat exchanger to alternatively reject heat from or transfer heat into the cabin and thermal management system of the vehicle. This provides the advantage that a heat exchanger can be eliminated from the thermal management system.

In some embodiments, the present disclosure provides a thermal management system for a vehicle, the thermal management system including: a first heat exchanger disposed in a HVAC system of the vehicle, where the first heat exchanger is an ambient heat exchanger with an air side in thermal communication with an external environment of the vehicle; and a second heat exchanger disposed in the HVAC system of the vehicle downstream of the first heat exchanger and adapted to receive an air flow through or around the first heat exchanger, where the second heat exchanger is adapted to function as either a heater or a cooler for a cabin of the vehicle responsive to an operating condition or environment of the vehicle. The thermal management system further includes a first blower fan disposed upstream of the first heat exchanger and adapted to direct air flow through the first heat exchanger and out of the HVAC system through an air evacuation channel. The thermal management system further includes a second blower fan disposed upstream of the first heat exchanger and adapted to direct air flow through or around the first heat exchanger and to the second heat exchanger and the cabin of the vehicle or a core bypass around the second heat exchanger. In some embodiments, the thermal management system further includes one or more cabin air recirculation channels adapted to recirculate cabin air to the HVAC system adjacent to one or more of the first blower fan and the second blower fan disposed upstream of the first heat exchanger. The thermal management system further includes a coolant circuit coupling the first heat exchanger and the second heat exchanger to a valve/pump module. The thermal management system further includes one or more of a battery system, an ED system, power electronics coupled to the valve/pump module by the coolant circuit. The thermal management system further includes a refrigerant circuit coupled to the coolant circuit. The thermal management system includes no additional heat exchangers disposed in the HVAC system or a coolant module of the vehicle aside from the first heat exchanger and the second heat exchanger.

In some embodiments, the present disclosure provides a vehicle including: a HVAC system; a first heat exchanger disposed in the HVAC system, where the first heat exchanger is an ambient heat exchanger with an air side in thermal communication with an external environment of the vehicle; and a second heat exchanger disposed in the HVAC system downstream of the first heat exchanger and adapted to receive an air flow through or around the first heat exchanger, where the second heat exchanger is adapted to function as either a heater or a cooler for a cabin of the vehicle responsive to an operating condition or environment of the vehicle. The vehicle further includes a first blower fan disposed upstream of the first heat exchanger and adapted to direct air flow through the first heat exchanger and out of the HVAC system through an air evacuation channel. The vehicle further includes a second blower fan disposed upstream of the first heat exchanger and adapted to direct air flow through or around the first heat exchanger and to the second heat exchanger and the cabin of the vehicle or a core bypass around the second heat exchanger. In some embodiments, the vehicle further includes one or more cabin air recirculation channels adapted to recirculate cabin air to the HVAC system adjacent to one or more of the first blower fan and the second blower fan disposed upstream of the first heat exchanger. The vehicle further includes a coolant circuit coupling the first heat exchanger and the second heat exchanger to a valve/pump module. The vehicle further includes one or more of a battery system, an ED system, power electronics coupled to the valve/pump module by the coolant circuit. The vehicle further includes a refrigerant circuit coupled to the coolant circuit. The vehicle includes no additional heat exchangers disposed in the HVAC system or a coolant module of the vehicle aside from the first heat exchanger and the second heat exchanger.

In some embodiments, the present disclosure provides a thermal management method for a vehicle, the thermal management method including: providing a first heat exchanger disposed in a HVAC system of the vehicle, where the first heat exchanger is an ambient heat exchanger with an air side in thermal communication with an external environment of the vehicle; and providing a second heat exchanger disposed in the HVAC system of the vehicle downstream of the first heat exchanger and adapted to receive an air flow through or around the first heat exchanger, where the second heat exchanger is adapted to function as either a heater or a cooler for a cabin of the vehicle responsive to an operating condition or environment of the vehicle. The thermal management method further includes directing air flow through the first heat exchanger and out of the HVAC system through an air evacuation channel using a first blower fan disposed upstream of the first heat exchanger. The thermal management method further includes directing air flow through or around the first heat exchanger and to the second heat exchanger and the cabin of the vehicle or a core bypass around the second heat exchanger using a second blower fan disposed upstream of the first heat exchanger. In some embodiments, the thermal management method further includes recirculating cabin air to the HVAC system adjacent to one or more of the first blower fan and the second blower fan disposed upstream of the first heat exchanger using one or more cabin air recirculation channels.

It will be readily apparent to those of ordinary skill in the art that aspects and features of the described embodiments may be included, omitted, or combined as desired in a given application, without limitation.

### BRIEF DESCRIPTION OF THE DRAWINGS

The present disclosure is illustrated and described with reference to the various drawings, in which like reference numbers are used to denote like system components/method steps, as appropriate, and in which:
FIG. 1 is a schematic diagram illustrating a vehicle in which the thermal management system of the present disclosure may be disposed and implemented;
FIG. 2 is a schematic diagram illustrating a conventional thermal management system, utilizing a separate cooling module and HVAC system with at least three heat exchangers;
FIG. 3 is a schematic diagram illustrating one embodiment of the thermal management system of the present disclosure, utilizing a HVAC system with an integrated cooling module with two heat exchangers; and
FIG. 4 is a flowchart illustrating one embodiment of the thermal management method of the present disclosure.

It will be readily apparent to those of ordinary skill in the art that aspects and features of the illustrated embodiments may be included, omitted, or combined as desired in a given application, without limitation.

### DETAILED DESCRIPTION

Again, the present disclosure provides a thermal management system for a vehicle, such as a BEV, utilizing a HVAC system with an integrated cooling module. Thus, the thermal management system of the present disclosure reduces the number of heat exchangers utilized to transfer thermal energy between the vehicle and the external environment. Further, the thermal management system of the present disclosure may recycle the thermal energy transferred into the cabin of the vehicle on the air side of the HVAC system back into the thermal management system via a recirculation air channel, making the thermal management system more energy efficient. Such energy efficiency and component cost are constantly evolving areas of focus in vehicle and thermal management system design. Integrating the cooling module of the present disclosure into the HVAC system and utilizing a switchable heat exchanger in the HVAC system enables the heat exchanger to alternatively reject heat from or transfer heat into the cabin and thermal management system of the vehicle. This provides the advantage that a heat exchanger can be eliminated from the thermal management system.

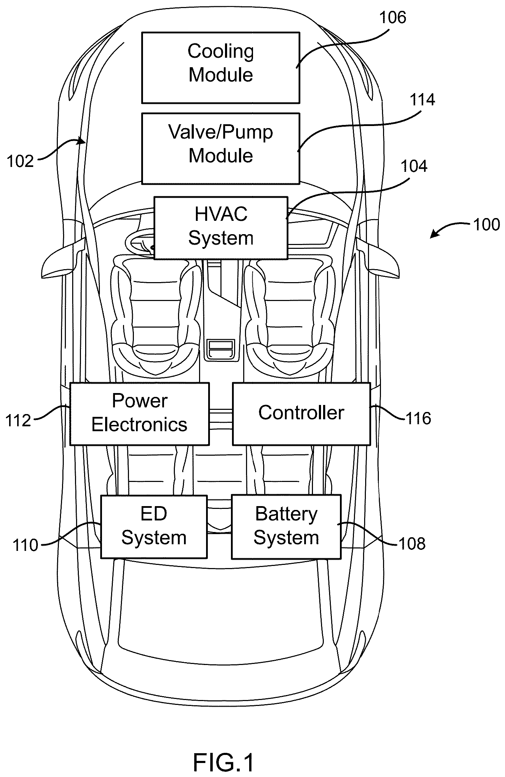

Referring to FIG. 1, a vehicle 100, such as a BEV, includes a thermal management system 102, which may be conventional or the thermal management system 102 of the present disclosure. These thermal management systems 102 include the HVAC system 104 that serves to cool/heat (and condition) the cabin of the vehicle 100 by thermal energy transfer between a coolant/refrigerant side of the HVAC system 104 and an air side of the HVAC system 104 and the cooling module 106 that serves exchange thermal energy between the thermal management system 102 of the vehicle 100 and the external environment by thermal energy transfer between a coolant/refrigerant side of the cooling module 106 and an air side of the cooling module 106. The thermal management system 102 also serves to cool/heat the battery system 108, the ED system 110, and the associated power electronics 112 of the vehicle 100. Thus, the thermal management system 102 enables thermal energy transfer between the HVAC system 104, the cooling module 106, the battery system 108, the ED system 110, and the associated power electronics 112 of the vehicle 100 via the actuation of the components of a valve/pump module 114 of the thermal management system 102. This actuation is controlled by a controller 116 of the thermal management system 102, which utilizes one or more processors, memories, and sensors to control the components of the thermal management system 102 responsive to ambient conditions, vehicle operational state inputs, user setting inputs, etc.

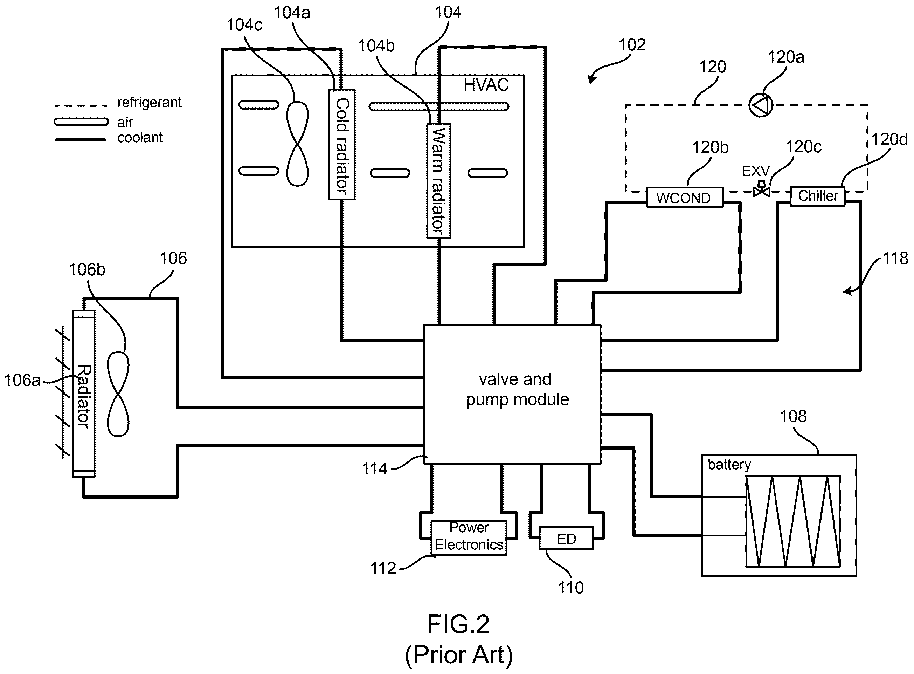

Referring to FIG. 2, in a conventional thermal management system 102, the HVAC system 104 includes a first heat exchanger/cooler (cold radiator) 104a that serves to selectively cool the cabin of the vehicle 100 and a second heat exchanger/heater (warm radiator) 104b that serves to selectively heat the cabin of the vehicle 100, both with the aide of a cabin blower fan 104c disposed in or adjacent to the cabin of the vehicle 100. The cooling module 106 includes a (third) ambient heat exchanger (radiator) 106a that serves to exchange thermal energy with the external environment using a blower fan 106b. The HVAC system 104 and the cooling module 106 are coupled to the battery system 108, the ED system 110, and the power electronics 112 via the valve/pump module 114 by means of a coolant circuit 118 disposed between the various systems/modules/components. The coolant circuit 118 is in thermal communication with a refrigerant circuit 120 that includes a compressor 120a, a water cooled condenser 120b, an expansion valve 120c, and a chiller 120d. It will be readily apparent to those of ordinary skill in the art that any of these systems/modules/circuits/components may include any number and configuration of additional components as desired in a given application.

The thermal management system 102 of the present disclosure is similarly used to transfer thermal energy between the external environment, the cooling module 106, the HVAC system 104, the cabin of the vehicle 100, the battery system 108, the ED system 110, the power electronics 112 and the refrigerant circuit 120 using the valve/pump module 114 and the coolant circuit 118. The HVAC system 104 includes an advantageous configuration of the cabin blower fan 104c, air flaps, and ducting, as described in greater detail below.

Conventional thermal management systems 102 typically utilize at least three heat exchangers that exchange heat with air, one in the cooling module 106 in the front of the vehicle 100 whose main purpose is to release heat to the external air in warm conditions and heat pump from the external air in cold conditions and two in the HVAC system 104 for cooling/heating the air that enters the cabin of the vehicle 100.

The thermal management system 102 of the present disclosure combines the ambient heat exchanger (cooling module radiator) 106a and one of the heat exchangers 104a in the HVAC system 104 into one heat exchanger, effectively integrating the cooling module 106 into the HVAC system 104. This simplification is enabled by air evacuation after the first heat exchanger in the HVAC system 104 and that the second heat exchanger in the HVAC system 104 can change between heating and cooling depending on conditions. Further, the complexity of the coolant valve/pump module 114 can be simplified thanks to the reduced number of connections required.

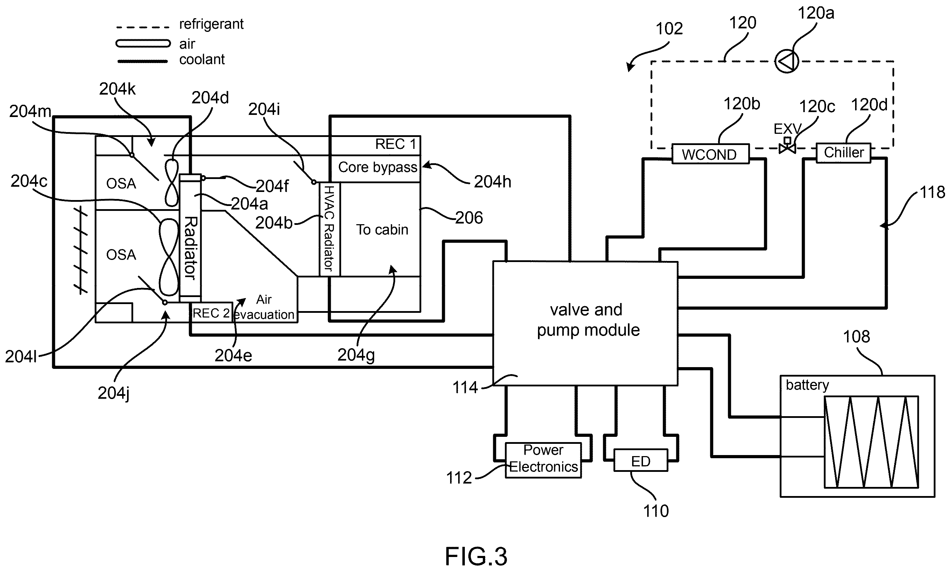

Referring to FIG. 3, in one embodiment, the thermal management system 102 of the present disclosure again includes an HVAC system 204, but in this case the HVAC system 204 essentially includes an integrated cooling module 106. The HVAC system 204 is thermally coupled to the battery system 108, the ED system 110, and the power electronics 112 via a valve/pump module 114 by means of a coolant circuit 118 disposed between the various systems/modules/components. The coolant circuit 118 is in thermal communication with the refrigerant circuit 120 that again includes the compressor 120a, the water cooled condenser 120b, the expansion valve 120c, and the chiller 120d. It will again be readily apparent to those of ordinary skill in the art that any of these systems/modules/circuits/components may include any number and configuration of additional components as desired in a given application. Of note, due to the decreased number of coolant connections associated with the HVAC system 204 including the integrated cooling module 106, the valve/pump module 114 and the coolant circuit 118 may be correspondingly simplified.

The HVAC system 204 includes a first heat exchanger (ambient radiator) 204a and a second heat exchanger (HVAC radiator) 204b coupled to the coolant circuit 118 and the valve/pump module 114. No third heat exchanger is utilized between the HVAC system 204 and the cooling module 106. The HVAC system 204 also includes a first (ambient) blower fan 204c and a second blower fan 204d on the air side upstream of the first heater exchanger 204a, as well as on the air side upstream of the second heat exchanger 204b. The first blower fan 204c is adapted to circulate air from the external environment through the first heat exchanger 204a to an air evacuation circuit 204e within the HVAC housing 206. The second blower fan 204d is adapted to circulate air from the external environment through and/or around the first heat exchanger 204a, as determined by the actuation of a first flow door 204f disposed adjacent to the first heat exchanger 204a. Air flow through or around the first heat exchanger 204a not routed through the air evacuation circuit 204e flows downstream through the second heat exchanger 204b and into the cabin 204g of the vehicle 110 or around the second heat exchanger 204b and through a core bypass 204h, as determined by the actuation of a second flow door 204i disposed adjacent to the second heat exchanger 204b. This simplified configuration is enabled by the air evacuation after the first heat exchanger 204a and that the second heat exchanger 204b can change between heating and cooling depending on conditions. Cabin air recirculation ducts 204j,204k are provided adjacent to both the first blower fan 204c and the second blower fan 204d, including associated third and fourth flow doors 204l,204m.

Thus, again, the present disclosure provides a thermal management system 102 for a vehicle 100, such as a BEV, utilizing a HVAC system 204 with an integrated cooling module 106. The thermal management system 102 of the present disclosure reduces the number of heat exchangers utilized to transfer thermal energy between the vehicle 100 and the external environment. Further, the thermal management system 102 of the present disclosure may recycle the thermal energy transferred into the cabin 204g of the vehicle 100 on the air side of the HVAC system 204 back into the thermal management system 102 via multiple recirculation air channels 204j,204k, making the thermal management system 102 more energy efficient. Such energy efficiency and component cost are constantly evolving areas of focus in vehicle and thermal management system design. Integrating the cooling module 106 of the present disclosure into the HVAC system 204 and utilizing a switchable heat exchanger 204b in the HVAC system 204 enables the heat exchanger 204b to alternatively reject heat from or transfer heat into the cabin 204g and thermal management system 102 of the vehicle 100. This provides the advantage that a third or additional heat exchanger can be eliminated from the thermal management system 102.

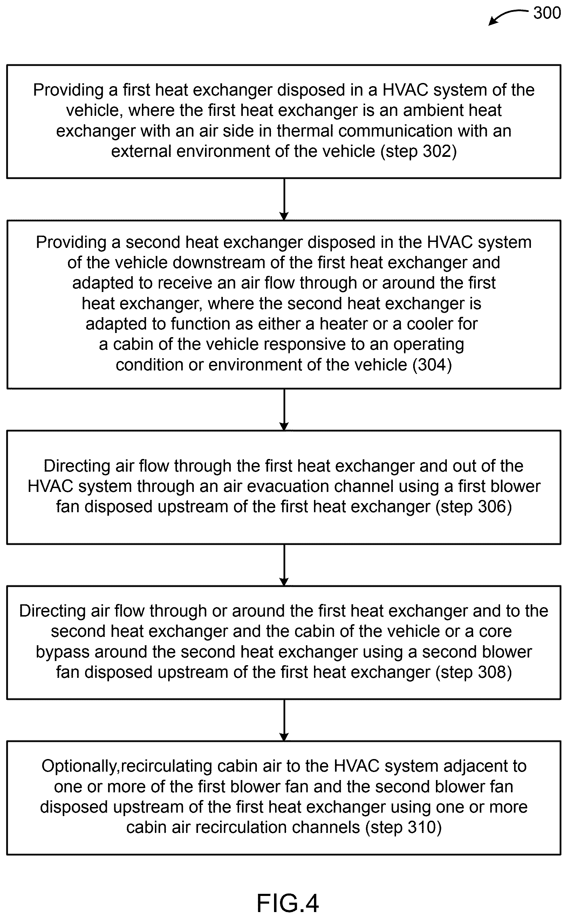

Referring to FIG. 4, the thermal management method 300 of the present disclosure includes providing a first heat exchanger disposed in a HVAC system of the vehicle, where the first heat exchanger is an ambient heat exchanger with an air side in thermal communication with an external environment of the vehicle (step 302); and providing a second heat exchanger disposed in the HVAC system of the vehicle downstream of the first heat exchanger and adapted to receive an air flow through or around the first heat exchanger, where the second heat exchanger is adapted to function as either a heater or a cooler for a cabin of the vehicle responsive to an operating condition or environment of the vehicle (step 304). The thermal management method 300 further includes directing air flow through the first heat exchanger and out of the HVAC system through an air evacuation channel using a first blower fan disposed upstream of the first heat exchanger (step 306). The thermal management method 300 further includes directing air flow through or around the first heat exchanger and to the second heat exchanger and the cabin of the vehicle or a core bypass around the second heat exchanger using a second blower fan disposed upstream of the first heat exchanger (step 308). In some embodiments, the thermal management method further includes recirculating cabin air to the HVAC system adjacent to one or more of the first blower fan and the second blower fan disposed upstream of the first heat exchanger using one or more cabin air recirculation channels (step 310).

Although the present disclosure is illustrated and described with reference to specific embodiments and examples, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following non-limiting claims for all purposes.

## Claims

1. A thermal management system (102) for a vehicle (100), the thermal management system comprising:
a first heat exchanger (204a) disposed in a heating, ventilation, and air conditioning (HVAC) system (204) of the vehicle, wherein the first heat exchanger is an ambient heat exchanger with an air side in thermal communication with an external environment of the vehicle; and
a second heat exchanger (204b) disposed in the HVAC system of the vehicle downstream of the first heat exchanger and adapted to receive an air flow through or around the first heat exchanger, wherein the second heat exchanger is adapted to function as either a heater or a cooler for a cabin (204g) of the vehicle responsive to an operating condition or environment of the vehicle.

2. The thermal management system of claim 1, further comprising a first blower fan (204c) disposed upstream of the first heat exchanger and adapted to direct air flow through the first heat exchanger and out of the HVAC system through an air evacuation channel (204e).

3. The thermal management system of claim 1, further comprising a second blower fan (204d) disposed upstream of the first heat exchanger and adapted to direct air flow through or around the first heat exchanger and to the second heat exchanger and the cabin of the vehicle or a core bypass (204h) around the second heat exchanger.

4. The thermal management system of claim 1, further comprising one or more cabin air recirculation channels (204j,204k) adapted to recirculate cabin air to the HVAC system adjacent to one or more of a first blower fan and a second blower fan disposed upstream of the first heat exchanger.

5. The thermal management system of claim 1, further comprising a coolant circuit (118) coupling the first heat exchanger and the second heat exchanger to a valve/pump module (114).

6. The thermal management system of claim 5, further comprising one or more of a battery system, an electric drive (ED) system, power electronics coupled to the valve/pump module by the coolant circuit.

7. The thermal management system of claim 5, further comprising a refrigerant circuit coupled to the coolant circuit.

8. The thermal management system of claim 1, further comprising no additional heat exchangers disposed in the HVAC system or a coolant module of the vehicle aside from the first heat exchanger and the second heat exchanger.

9. A vehicle comprising the thermal management system of any of claim 1-8.

10. A heating, ventilation, and air conditioning (HVAC) system of a vehicle comprising the thermal management system of any of claim 1-8.

11. A thermal management method for a vehicle (100), the thermal management method comprising:
providing a first heat exchanger (204a) disposed in a heating, ventilation, and air conditioning (HVAC) system (204) of the vehicle, wherein the first heat exchanger is an ambient heat exchanger with an air side in thermal communication with an external environment of the vehicle; and
providing a second heat exchanger (204b) disposed in the HVAC system of the vehicle downstream of the first heat exchanger and adapted to receive an air flow through or around the first heat exchanger, wherein the second heat exchanger is adapted to function as either a heater or a cooler for a cabin (204g) of the vehicle responsive to an operating condition or environment of the vehicle.

12. The thermal management method of claim 11, further comprising directing air flow through the first heat exchanger and out of the HVAC system through an air evacuation channel (204e) using a first blower fan (204c) disposed upstream of the first heat exchanger.

13. The thermal management method of claim 11, further comprising directing air flow through or around the first heat exchanger and to the second heat exchanger and the cabin of the vehicle or a core bypass (204h) around the second heat exchanger using a second blower fan disposed upstream of the first heat exchanger.

14. The thermal management method of claim 11, further comprising recirculating cabin air to the HVAC system adjacent to one or more of a first blower fan and a second blower fan disposed upstream of the first heat exchanger using one or more cabin air recirculation channels (204j,204k).
